Europäisches Patentamt

European Patent Office

Office européen des brevets

(19)

(11)  EP 1 392 059 A1

(12)  EUROPEAN PATENT APPLICATION
published in accordance with Art. 158(3) EPC

(43) Date of publication:
25.02.2004 Bulletin 2004/09

(51) Int Cl.⁷: H04N 7/08, H04J 3/00

(21) Application number: 02722909.5

(22) Date of filing: 30.04.2002

(86) International application number:
PCT/JP2002/004337

(87) International publication number:
WO 2002/091740 (14.11.2002 Gazette 2002/46)

(84) Designated Contracting States:
AT BE CH CY DE DK ES FI FR GB GR IE IT LI LU
MC NL PT SE TR

(30) Priority: 01.05.2001 JP 2001134449

(71) Applicant: MITSUBISHI DENKI KABUSHIKI
KAISHA
Tokyo 100-8310 (JP)

(72) Inventors:
• MINEGISHI, Noriyuki, c/o Mitsubishi Denki K. K.
Tokyo 100-8310 (JP)
• ASANO, Kenichi, c/o Mitsubishi Denki K. K.
Tokyo 100-8310 (JP)

(74) Representative: Blot, Philippe Robert Emile et al
c/o Cabinet Lavoix,
2, place d'Estienne d'Orves
75441 Paris Cedex 09 (FR)

(54)  MEDIUM DATA TRANSMISSION SYSTEM AND MEDIUM DATA TRANSMISSION METHOD

(57)  In cases where media data denotes data to be accumulated, accumulation instructing information instructing the accumulation is embedded in data stream (s) by a transmitting means. In cases where the accumulation instructing information is embedded in the data stream(s), the media data is once accumulated in a buffer by a decoding means and is decoded.

## FIG.6

## Description

TECHNICAL FIELD

The present invention relates to a media data transmitting system and a media data transmitting method in which media data is transmitted as a plurality of data streams in packet communication.

BACKGROUND ART

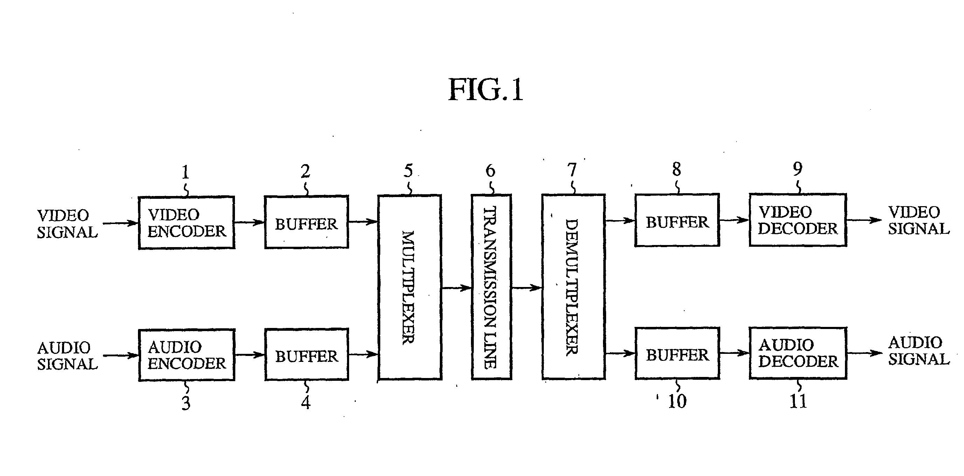

Fig. 1 is a constitutional view showing a conventional media data transmitting system, for example, disclosed in the attached document D "System Timing Model and Application Packaging" of a recommendation letter (H series) related to ITU-T Audio-Visual/Multimedia (New Japan ITU Association of an incorporated foundation). In Fig. 1, 1 indicates a video encoder for coding a video signal according to a prescribed coding method. 2 indicates a buffer for storing the video signal coded in the video encoder 1. 3 indicates an audio encoder for coding an audio signal according to the prescribed coding method. 4 indicates a buffer for storing the audio signal coded in the audio encoder 3.

5 indicates a multiplexer for multiplexing the video signal stored in the buffer 2 and the audio signal stored in the buffer 4 with each other to produce a plurality of data streams and outputting the data streams to a transmission line 6. 6 indicates the transmission line. 7 indicates a demultiplexer for receiving each data stream, performing the demultiplexing processing for the data stream, making a buffer 8 store the coded video signal and making a buffer 10 store the coded audio signal. 8 indicates the buffer for storing the coded video signal. 9 indicates a video decoder for decoding the video signal stored in the buffer 8. 10 indicates the buffer for storing the coded audio signal. 11 indicates an audio decoder for decoding the audio signal stored in the buffer 10.

Next, an operation will be described below. A video signal is initially coded in the video coder 1 according to the prescribed coding method, and an audio signal is coded in the audio coder 3 according to the prescribed coding method. The coded video signal and the coded audio signal are formed in a serial bit string data format called elementary stream (ES) data.

In the multiplexer 5, the video signal stored in the buffer 2 and the audio signal stored in the buffer 4 are multiplexed with each other to produce a plurality of data streams, and the data streams are output to the transmission line 6.

Here, in the multiplexing processing for both the video signal and the audio signal, a plurality of packets of the ES data are produced to obtain packetized elementary stream (PES) data, and the PES data is output to the transmission line 6. Also, there is another case where the PES data is changed to transport stream (TS) data or program stream (PS) data and is output.

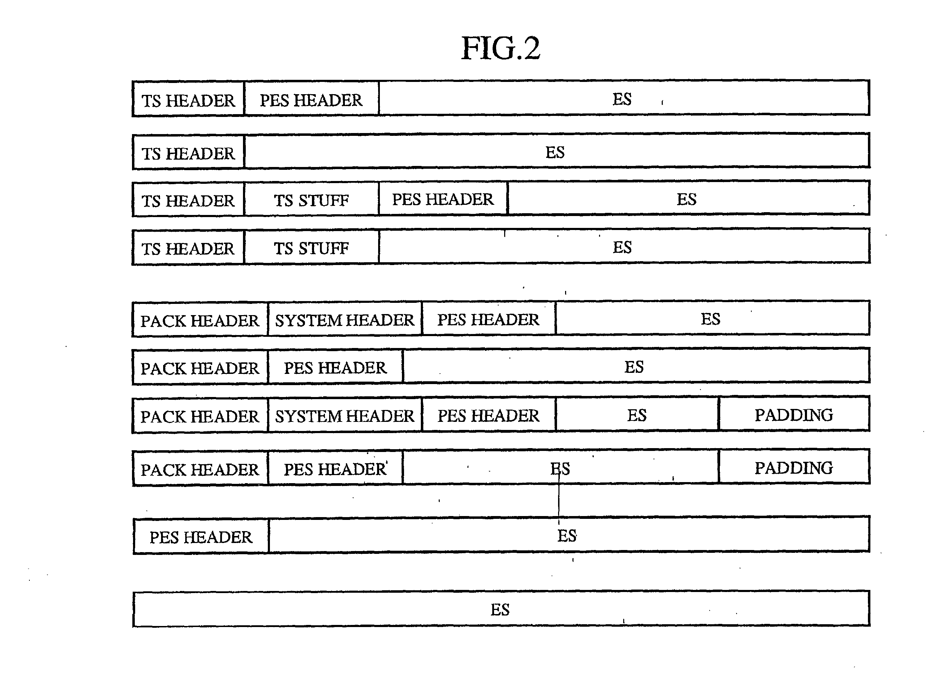

Fig. 2 is an explanatory view showing a hierarchy structure of each data stream. The data stream based on each of an ES format, a PES format, a TS format and a PS format has a hierarchy structure, and the data stream obtained by combining pieces of data in various combinations shown in Fig. 2 is transmitted.

In the demultiplexer 7, when one data stream is received from the transmission line 6, the demultiplexing processing is performed for the data stream, the coded video signal is stored in the buffer 8, and the coded audio signal is stored in the buffer 10.

In the video decoder 9, the video signal stored in the buffer 8 is decoded. In the audio decoder 11, the audio signal stored in the buffer 10 is decoded.

Here, the packaging of timing definition for each format will be described below.

A timing definition called VBV-delay is packaged in video data of the ES format. The VBV-delay is used to adjust an amount of coded data which is accumulated in a VBV buffer placed in the video decoder 9. The VBV-delay is used according to each of two methods.

In the first method, the VBV-delay is used in cases where coded data is transmitted at a fixed transmission rate (or a fixed bit rate). Coded data is accumulated in the VBV buffer during a time period defined by the VBV-delay, and the decoding for the coded data is started. By using the VBV-delay, the overflow and underflow of the VBV buffer is prevented.

In the second method, the VBV-delay is used in cases where coded data stored in an accumulating medium such as a DVD player is input to the video decoder 9. When the VBV-delay is set to a value of FFFF expressed by the hexadecimal notation, coded data is packed in the VBV buffer until the VBV buffer is full up with the coded data. When the VBV buffer is full up with the coded data, the decoding for the coded data is started. The coded data is supplied to the VBV buffer when the VBV buffer is not full with the coded data. When the VBV buffer is full with the coded data, the data supply to the VBV buffer is adjusted not to input the coded data to the VBV buffer until a prescribed amount of data is removed from the VBV buffer.

In the PES format, a time stamp called a presentation time stamp (PTS) and a time stamp called a decoding time stamp (DTS) can be added to the data stream. The PTS indicates a presentation time of audio and picture. The DTS indicates a decoding time of audio and picture. Therefore, the decoding time of both the video data and the audio data and the presentation time of both the video data and the audio data can be independently set.

In a case where a presentation time of a presentation unit k is set to $tp_n(k)$, the PTS is expressed as follows.

$$PTS(k) = ((SCF \times tp_n(k))DIV\ 300)\ \%2^{33}$$

Here, SCF denotes a system clock frequency, and SCF is defined as 27 MHz according to the recommendation.

Also, in a case where a decoding time of an access unit j is set to $td_n(j)$, the DTS is expressed as follows.

$$DTS(j) = ((SCF \times td_n (j)) \text{ DIV } 300) \%2^{33}$$

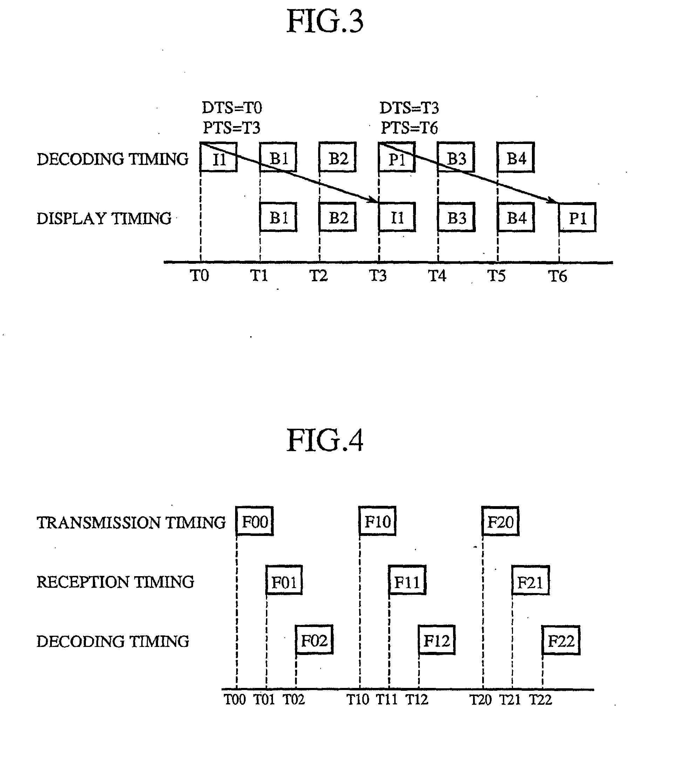

Examples of the DTS and the PTS actually used will be described below with reference to Fig. 3.

The DTS and the PTS are used for the transfer of each B picture (bidirectional predictive coded picture). The B-picture is predicted and replayed by using I-pictures (intra-frame coded pictures) or P-pictures (inter-frame forward predictive coded pictures) placed at a position preceding the B-picture and a position succeeding the B-picture on the axis of the presentation time. Therefore, unless the I-picture or the P-picture succeeding the B-picture on the axis of the presentation time is decoded, the B-picture cannot be decoded. For the purpose of the transfer of frames described above, the presentation time stamp PTS and the decoding time stamp DTS are added to the data stream as information of a PES packet. The presentation time stamp PTS and the decoding time stamp DTS are used for each picture existing in the PES packet and starting from a picture header. Though ES data is stored in the PES packet, the ES data of the PES packet is not necessarily started from the picture header.

A timing definition called a program clock reference (PCR) is packaged in the TS format. The PCR is coded at both a program clock reference base (PCR-base) and a program clock reference ext (PCR-ext).

The PCR is expressed as follows.

$$PCR(i) = PCR\text{-}base(i) \times 300 + PCR\text{-}ext(i)$$

The PCR-base(i) and the PCR-ext(i) are expressed as follows.

$$PCR\text{-}base(i) = ((SCF \times t (i)) \text{ DIV } 300) \%2^{33}$$

$$PCR\text{-}ext(i) = ((SCF \times t(i)) \text{DIV } 1)\%300$$

Here, t(i) denotes a time of an i-th piece of TS data input from the transmission line 6 on the assumption that the TS data is intermittently transmitted at a fixed transmission rate. An i-th byte of TS data arrives at a time t(i). The time t(i) is calculated from the PCR of a piece of TS data preceding the i-th byte of TS data, the PCR of a piece of TS data succeeding the i-th byte of TS data and the fixed transmission rate. The purpose of the PCR is to transmit a system clock frequency, and a clock signal can be reproduced from a bit rate and the PCR of TS packets.

A timing definition called a system clock reference (SCR) is packaged in the PS format in the same manner as the PCR of the TS format. The SCR is expressed by SCR-base and SCR-ext in the same manner as the PCR. A definition equation of the SCR is the same as that of the PCR. Next, transmission conditions of the data stream will be described below. Fig. 4 is an explanatory view showing transmission conditions of the data streams in a case of a fixed transmission rate. In Fig. 4, F00, F10 and F20 indicate system-coded and multiplexed data streams respectively. For example, the data stream F00 is transmitted at a time T00. The transmitted data stream gains a certain transmission path delay and arrives at a receiving end at a time T01. F01, F11 and F21 indicate received data streams respectively. A decoding operation is performed for the received data streams. F02, F12 and F22 indicate pieces of decoded data respectively. When the pieces of decoded data denote picture data respectively, the pieces of decoded data F02, F12 and F22 are reproduced. For example, the decoded data F02 is reproduced at a time T02.

Because the conventional media data transmitting system has the above-described configuration, when a bit rate of data transmitted through the transmission line 6 is changed, there is a case where media data cannot be decoded.

The reason will be described below.

The timing of pieces of coded data multiplexed with each other in the data stream is determined on the assumption that the data stream is transmitted at a fixed bit rate, a transmission path delay from the input of the coding end to the output of the decoded data on the decoding end is fixed, and the data inputting to the decoder is adjusted while referring to an amount of data accumulated in the buffer.

Accordingly, in cases where coded data is transmitted through the transmission line 6 at a variable bit rate, the coded data cannot be reproduced by using the conventional media data transmitting system.

In cases where data is transmitted through the transmission line 6 at a variable bit rate or a transmission path delay from the input of the coding end to the output of the decoded data on the decoding end is variable, even though a decoding start time is adjusted according to the VBV-delay multiplexed with the ES data, there is a probability that underflow or overflow occurs in the VBV buffer. Therefore, even though the VBV-delay is set to the value FFFF expressed by the hexadecimal notation, data transmitted through the transmission line 6 cannot be adjusted according to an amount of data accumulated in the buffer, and there is still a probability that underflow or overflow of data occurs in the VBV buffer.

Also, in the decoding operation using both the PTS and the DTS multiplexed in the PES format, there is a case where the transmission of a coded picture to be presented later is not delayed in time for the presentation of the coded picture. Also, in case of the PCR multiplexed in the TS format or the SCR multiplexed in the PS format, a system clock signal is reproduced according to the transmission rate. Therefore, a system clock signal cannot be accurately reproduced. As a result, the decoding operation for coded data cannot be performed.

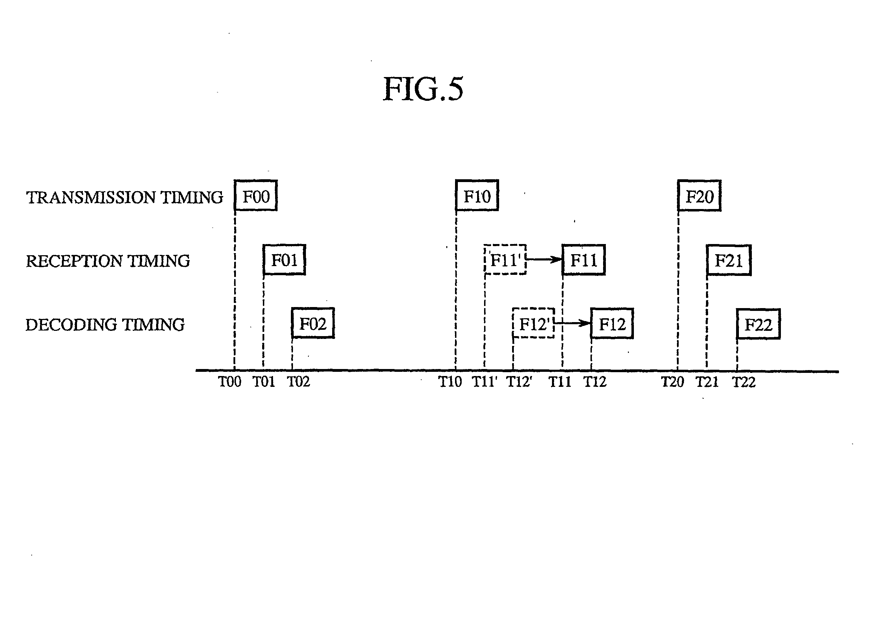

Fig. 5 is an explanatory view showing transmission conditions of the data streams in a case of a variable transmission rate. A transmission path delay of a second transmitted data stream F10 differs from that of a first transmitted data stream F00. Therefore, though the second transmitted data stream F10 is planned to arrive at an original time T11' and to be presented at an original time T12', the second transmitted data stream F10 actually arrives at a time T11 and is presented at a time T12, and the second transmitted data stream F10 is not presented until the original presentation time T12'. Also, even though the reproduction of the system clock signal based on the PCR or the SCR is performed, the arrival time of one data stream differs from that of another data stream, the cycle of the arrival times of the data streams cannot be specified, and it is impossible to reproduce the clock signal.

The present invention is provided to solve the above-described problem, and the object of the present invention is to provide a media data transmitting system and a media data transmitting method in which media data can be reliably decoded regardless of a bit rate of a transmission line.

DISCLOSURE OF THE INVENTION

A media data transmitting system according to the present invention includes transmitting means and decoding means so as to embed accumulation instructing information instructing the accumulation in a data stream or a plurality of data streams by the transmitting means in a case where media data denotes data to be accumulated and so as to once accumulate the media data in a buffer and decode the media data by the decoding means in a case where the accumulation instructing information is embedded in the data stream or the data streams.

Therefore, the media data transmitting system can be obtained to reliably decode a video signal regardless of a bit rate of the media data transmitted through a transmission line.

The media data transmitting system according to the present invention has the transmitting means so as to include information indicating a top of data to be accumulated in the accumulation instructing information.

Therefore, the accumulation of data preceding the top of data is not required. As a result, the media data transmitting system can be obtained to reduce a memory capacity.

The media data transmitting system according to the present invention has the transmitting means so as to include information indicating an end of data to be accumulated in the accumulation instructing information by the transmitting means.

Therefore, the accumulation of data succeeding the end of data is not required. As a result, the media data transmitting system can be obtained to reduce a memory capacity.

The media data transmitting system according to the present invention has the transmitting means so as to include information indicating an average bit rate of data to be accumulated in the accumulation instructing information by the transmitting means.

Therefore, the accumulation of data not desired to be accumulated is not required. As a result, the media data transmitting system can be obtained to reduce a memory capacity.

The media data transmitting system according to the present invention has the transmitting means so as to include information indicating a transfer time period of data to be accumulated in the accumulation instructing information by the transmitting means.

Therefore, the accumulation of data not desired to be accumulated is not required. As a result, the media data transmitting system can be obtained to reduce a memory capacity.

The media data transmitting system according to the present invention has the transmitting means so as to include information indicating a data length of data to be accumulated in the accumulation instructing information by the transmitting means.

Therefore, the accumulation of data not desired to be accumulated is not required. As a result, the media data transmitting system can be obtained to reduce a memory capacity.

The media data transmitting system according to the present invention has the transmitting means so as to include information indicating a position of data to be accumulated in the accumulation instructing information by the transmitting means.

Therefore, the accumulation of data not desired to be accumulated is not required. As a result, the media data transmitting system can be obtained to reduce a memory capacity.

A media data transmitting method according to the present invention, includes the steps of embedding accumulation instructing information instructing the accumulation in a data stream or a plurality of data streams in a case where media data denotes data to be accumulated, once accumulating the media data in a buffer, in a case where the accumulation instructing information is embedded in the data stream or the data streams, and decoding the media data.

Therefore, the media data transmitting method can be obtained to reliably decode a video signal regardless of a bit rate of the media data transmitted through a transmission line.

The media data transmitting method according to the present invention includes a step of including information indicating a top of the data to be accumulated in the accumulation instructing information.

Therefore, the accumulation of data preceding the top of data is not required. As a result, the media data transmitting method can be obtained to reduce a memory capacity.

The media data transmitting method according to the present invention includes a step of including information indicating an end of the data to be accumulated in the accumulation instructing information.

Therefore, the accumulation of data preceding the top of data is not required. As a result, the media data transmitting method can be obtained to reduce a memory capacity.

The media data transmitting method according to the present invention includes a step of including information indicating an average bit rate of the data to be accumulated in the accumulation instructing information.

Therefore, the accumulation of data not desired to be accumulated is not required. As a result, the media data transmitting method can be obtained to reduce a memory capacity.

The media data transmitting method according to the present invention includes a step of including information indicating a transfer time period of the data to be accumulated in the accumulation instructing information.

Therefore, the accumulation of data not desired to be accumulated is not required. As a result, the media data transmitting method can be obtained to reduce a memory capacity.

The media data transmitting method according to the present invention includes a step of including information indicating a data length of the data to be accumulated is included in the accumulation instructing information.

Therefore, the accumulation of data not desired to be accumulated is not required. As a result, the media data transmitting method can be obtained to reduce a memory capacity.

The media data transmitting method according to the present invention includes a step of including information indicating a position of the data to be accumulated in the accumulation instructing information.

Therefore, the accumulation of data not desired to be accumulated is not required. As a result, the media data transmitting method can be obtained to reduce a memory capacity.

BRIEF DESCRIPTION OF THE DRAWINGS

Fig. 1 is a constitutional view showing a conventional media data transmitting system.

Fig. 2 is an explanatory view showing a hierarchy structure of a data stream.

Fig. 3 is an explanatory view showing examples of DTS and PTS packaged in a PES packet.

Fig. 4 is an explanatory view showing transmission conditions of data streams in a case of a fixed transmission rate.

Fig. 5 is an explanatory view showing transmission conditions of data streams in a case of a variable transmission rate.

Fig. 6 is a constitutional view showing a media data transmitting system according to a first embodiment of the present invention.

Fig. 7 is a flow chart showing a media data transmitting method according to the first embodiment of the present invention.

Fig. 8 is an explanatory view showing characteristic transmission conditions of the first embodiment.

BEST MODE FOR CARRYING OUT THE INVENTION

Hereinafter, the best mode for carrying out the present invention will now be described with reference to the accompanying drawings to explain the present invention in more detail.

EMBODIMENT 1

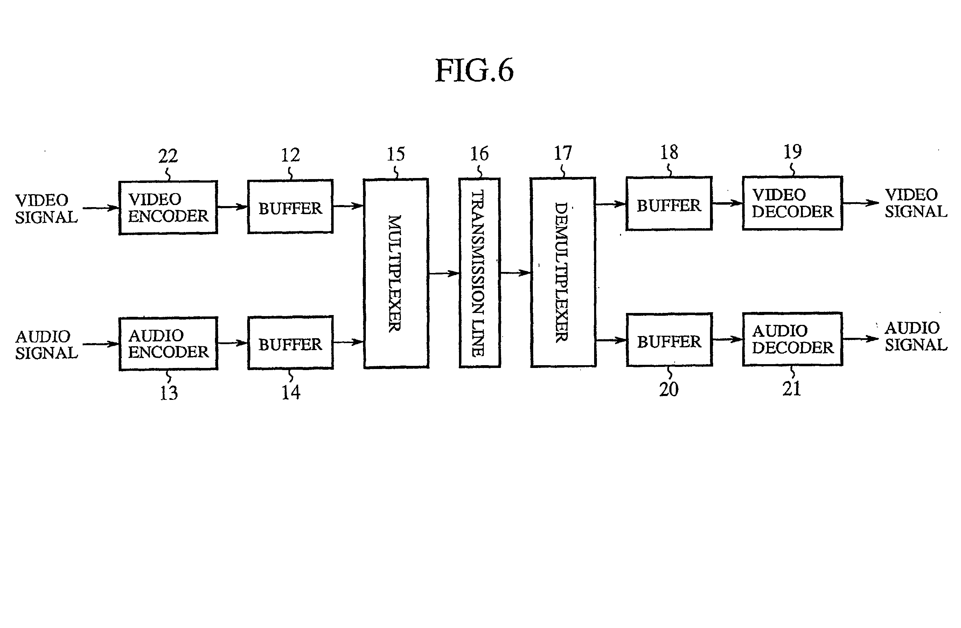

Fig. 6 is a constitutional view showing a media data transmitting system according to a first embodiment of the present invention. In Fig. 6, 22 indicates a video encoder for coding a video signal according to a prescribed coding method. 12 indicates a buffer for storing the video signal coded in the video encoder 22. 13 indicates an audio encoder for coding an audio signal according to the prescribed coding method. 14 indicates a buffer for storing the audio signal coded in the audio encoder 13.

15 indicates a multiplexer for multiplexing the video signal stored in the buffer 12 and the audio signal stored in the buffer 14 with each other to produce a plurality of data streams and outputting the data streams to a transmission line 16. 16 indicates the transmission line. 17 indicates a demultiplexer for receiving each data stream, performing the demultiplexing processing for the data stream, making a buffer 18 store the coded video signal and making a buffer 20 store the coded audio signal.

Here, transmitting means comprises the video encoder 22, the audio encoder 13, the buffers 12 and 14, the multiplexer 15 and the transmission line 16.

18 indicates the buffer for storing the coded video signal. 19 indicates a video decoder for decoding the video signal stored in the buffer 18. 20 indicates the buffer for storing the coded audio signal. 21 indicates an audio decoder for decoding the audio signal stored in the buffer 20.

Here, decoding means comprises the demultiplexer 17, the video decoder 19 and the audio decoder 21.

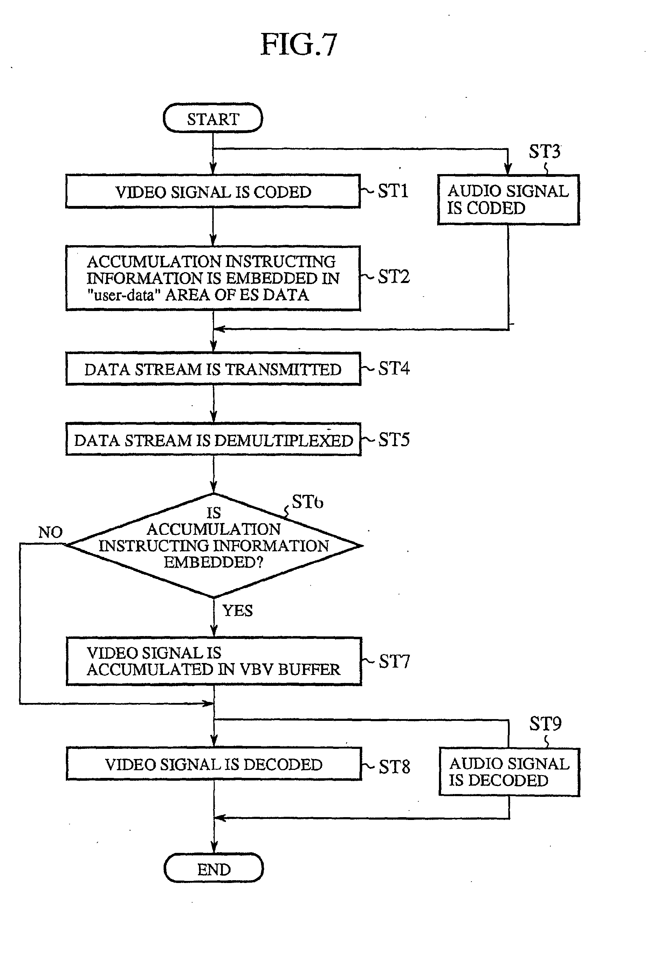

Fig. 7 is a flow chart showing a media data transmitting method according to the first embodiment of the present invention.

Next, an operation will be described below.

In the video encoder 22, a video signal is coded according to a prescribed coding method and is stored in the buffer 12 (step ST1).

Here, in cases where the video signal denotes data to be accumulated, the embedding processing is performed in the video encoder 22 to embed accumulation instructing information instructing the accumulation of data in a "user data" area of ES data as an example (step ST2).

In contrast, in the audio encoder 13, an audio signal is coded according to the prescribed coding method and is stored in the buffer 14 (step ST3).

In the multiplexer 15, the video signal stored in the buffer 12 and the audio signal stored in the buffer 14 are multiplexed with each other to produce a plurality of data streams, and the data streams are output to the transmission line 16 (step ST4).

Here, in the multiplexing processing for both the video signal and the audio signal, a plurality of packets of the ES data are produced to obtain packetized elementary stream (PES) data, and the PES data is output to the transmission line 16. Also, there is another case where the PES data is changed to transport stream (TS) data or program stream (PS) data and is output.

In the demultiplexer 17, when the data stream is received from the transmission line 16, the demultiplexing processing is performed for the data stream, the coded video signal is stored in the buffer 18, and the coded audio signal is stored in the buffer 20 (step ST5).

In the video decoder 19, the video signal stored in the buffer 18 is decoded. Here, in cases where the accumulation instructing information is embedded in the "user data" area of the ES data (step ST6), the video signal is once accumulated in a VBV buffer existing in the video decoder 19 and is decoded (steps ST7 and ST8).

In contrast, in the audio decoder 21, the audio signal stored in the buffer 20 is decoded (step ST9).

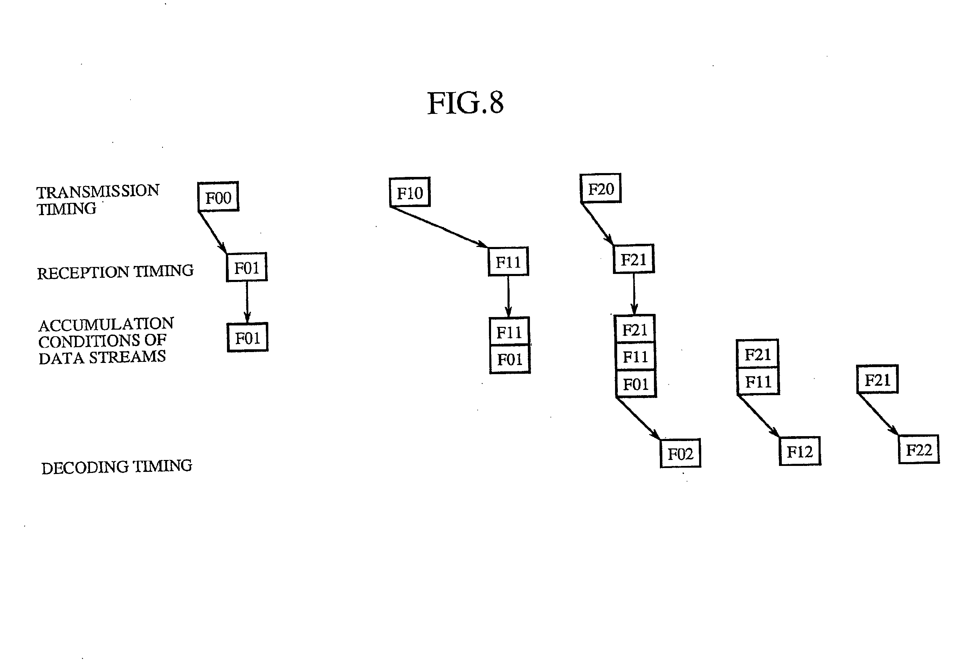

Fig. 8 is an explanatory view showing characteristic transmission conditions of this first embodiment.

Media data to be transmitted denotes data to be accumulated, and it is assumed that the bit rate of data transmitted through the transmission line 16 is variable.

Because the transmission path delay of the transmitted data streams F00, F10 and F20 is not fixed, the time intervals of the transmitted data streams F00, F10 and F20 in the receiving operation differ from those in the transmitting operation.

In the first embodiment, the accumulation instructing information indicates that transmitted data denotes data to be accumulated, and the accumulation instructing information is superimposed on the transmitted data streams. Therefore, the transmitted data streams received are accumulated. The received data streams F01, F11 and F21 indicate accumulated data streams respectively.

In detail, as described below, the accumulation of data is performed in a following sequence.

When the data stream F01 is received, the data stream F01 is decoded on the receiving end, and the accumulation instructing information instructing the accumulation of data is detected from the data stream F01. In cases where the accumulation instructing information instructing the accumulation of data is detected and information indicating the top of the data streams to be accumulated is detected from the accumulation instructing information, the accumulation of data is started on the receiving end. Also, in cases where information indicating the position of the data streams to be accumulated is detected from the accumulation instructing information, the accumulation of data is started according to the information indicating the position.

In the same procedure, the data streams F11 and F21 are successively accumulated. Therefore, a plurality of data streams are accumulated one after another. The accumulation of the data streams is continued until information indicating the end of the data streams to be accumulated is detected from the accumulation instructing information.

The accumulation of data streams is completed when the information indicating the end of the data streams to be accumulated is detected. Also, the accumulation of data streams can be completed according to each of two following methods.

In the first method, information indicating the length of data streams to be accumulated is embedded in the accumulation instructing information. When this information is detected on the receiving end, the length of data streams accumulated from the start of the accumulation is measured. When the length of data streams accumulated reaches the length indicated by the information, the accumulation of data streams is completed.

In the second method, information indicating an average bit rate (or a transfer time period) of data streams to be accumulated is embedded in the accumulation instructing information. When this information is detected on the receiving end, an accumulation completion time is calculated from the accumulation start time by converting the average bit rate, and the accumulation is completed at the calculated accumulation completion time.

When all pieces of data to be accumulated are accumulated, the decoding of the pieces of data is started. The data stream F01 accumulated is decoded to the data stream F02 and is reproduced.

Thereafter, the data stream F11 accumulated is decoded. In this case, the decoding-reproduction is performed at fixed time intervals of the presentation-reproduction. For example, in case of the picture data, the presentation operation is performed for each time period of 1/30 second. As is described above, all pieces of data of the data streams F02, F12 and F22 accumulated are decoded and reproduced.

Information required in the above-described processing is the accumulation instructing information indicating a data stream or a plurality of data streams to be once accumulated, or information required in the above-described processing is obtained by combining the accumulation instructing information indicating a data stream or a plurality of data streams to be once accumulated and other information (the information indicating the top of the data stream(s) to be accumulated, the information indicating the end of the data stream (s) to be accumulated, the average bit rate of the data stream(s) to be accumulated, the information indicating the position of the data stream(s) to be accumulated or the information indicating the length of the data stream (s) to be accumulated). Therefore, all pieces of information are not required.

As is described above, in the first embodiment, in cases where the video signal denotes data to be accumulated, the accumulation instructing information instructing the accumulation is embedded in a data stream or a plurality of data streams and is transmitted. In cases where the accumulation instructing information is embedded in the data stream(s), the video signal is once accumulated in the VBV buffer and is decoded. Therefore, the video signal can be reliably decoded regardless of the bit rate of data transmitted through the transmission line 16.

EMBODIMENT 2

In the first embodiment, the embedding of the accumulation instructing information is performed in the video encoder 22, and the embedding of the accumulation instructing information is detected in the video decoder 19. However, the present invention is not limited to the first embodiment. For example, it is applicable that the embedding of the accumulation instructing information be performed in the multiplexer 15 and the embedding of the accumulation instructing information is detected in the demultiplexer 17.

Also, in the first embodiment, the accumulation instructing information is embedded in the "user data" area of the ES data. However, the present invention is not limited to the first embodiment. For example, it is applicable that the accumulation instructing information be embedded in the PES data, the TS data or the PS data.

INDUSTRIAL APPLICABILITY

As is described above, the present invention is appropriate to the media data transmitting system and the media data transmitting method in which media data is reliably decoded regardless of a bit rate of the media data transmitted through a transmission line.

**Claims**

1. A media data transmitting system, comprising:

   transmitting means for transmitting a data stream or a plurality of data streams in which a packet of media data or a plurality of packets of media data exist; and
   decoding means for taking out the media data from the data stream or the data streams transmitted by the transmitting means, **characterized in that** accumulation instructing information instructing the accumulation is embedded in the data stream or the data streams by the transmitting means in a case where the media data denotes data to be accumulated, and the media data is once accumulated in a buffer and is decoded by the decoding means in a case where the accumulation instructing information is embedded in the data stream or the data streams.

2. The media data transmitting system according to claim 1, wherein information indicating a top of data to be accumulated is included in the accumulation instructing information by the transmitting means.

3. The media data transmitting system according to claim 1, wherein information indicating an end of data to be accumulated is included in the accumulation instructing information by the transmitting means.

4. The media data transmitting system according to claim 1, wherein information indicating an average bit rate of data to be accumulated is included in the accumulation instructing information by the transmitting means.

5. The media data transmitting system according to claim 1, wherein information indicating a transfer time period of data to be accumulated is included in the accumulation instructing information by the transmitting means.

6. The media data transmitting system according to claim 1, wherein information indicating a data length of data to be accumulated is included in the accumulation instructing information by the transmitting means.

7. The media data transmitting system according to claim 1, wherein information indicating a position of data to be accumulated is included in the accumulation instructing information by the transmitting means.

8. A media data transmitting method, comprising the steps of:

transmitting a data stream or a plurality of data streams in which a packet of media data or a plurality of packets of media data exist; and taking out the media data from the data stream or the data streams transmitted,

**characterized in that** the step of transmitting the data stream includes a step of embedding accumulation instructing information instructing the accumulation in the data stream or the data streams in a case where the media data denotes data to be accumulated, and

the step of taking out the media data includes a step of once accumulating the media data in a buffer, in a case where the accumulation instructing information is embedded in the data stream or the data streams, and a step of decoding the media data.

9. The media data transmitting method according to claim 8, wherein the step of embedding the accumulation instructing information includes a step of including information indicating a top of the data to be accumulated in the accumulation instructing information.

10. The media data transmitting method according to claim 8, wherein the step of embedding the accumulation instructing information includes a step of including information indicating an end of the data to be accumulated in the accumulation instructing information.

11. The media data transmitting method according to claim 8, wherein the step of embedding the accumulation instructing information includes a step of including information indicating an average bit rate of the data to be accumulated in the accumulation instructing information.

12. The media data transmitting method according to claim 8, wherein the step of embedding the accumulation instructing information includes a step of including information indicating a transfer time period of the data to be accumulated in the accumulation instructing information.

13. The media data transmitting method according to claim 8, wherein the step of embedding the accumulation instructing information includes a step of including information indicating a data length of the data to be accumulated in the accumulation instructing information.

14. The media data transmitting method according to claim 8, wherein the step of embedding the accumulation instructing information includes a step of including information indicating a position of the data to be accumulated in the accumulation instructing information.

# FIG.1

EP 1 392 059 A1

# FIG.2

| TS HEADER | PES HEADER | ES |
|---|---|---|

| TS HEADER | ES |
|---|---|

| TS HEADER | TS STUFF | PES HEADER | ES |
|---|---|---|---|

| TS HEADER | TS STUFF | ES |
|---|---|---|

| PACK HEADER | SYSTEM HEADER | PES HEADER | ES |
|---|---|---|---|

| PACK HEADER | PES HEADER | ES |
|---|---|---|

| PACK HEADER | SYSTEM HEADER | PES HEADER | ES | PADDING |
|---|---|---|---|---|

| PACK HEADER | PES HEADER | ES | PADDING |
|---|---|---|---|

| PES HEADER | ES |
|---|---|

| ES |
|---|

EP 1 392 059 A1

# FIG.3

DTS=T0　　　　　　　DTS=T3
PTS=T3　　　　　　　PTS=T6

DECODING TIMING　| I1 | | B1 | | B2 | | P1 | | B3 | | B4 |

DISPLAY TIMING　　　　| B1 | | B2 | | I1 | | B3 | | B4 | | P1 |

T0　　T1　　T2　　T3　　T4　　T5　　T6

# FIG.4

TRANSMISSION TIMING | F00 | | F10 | | F20 |

RECEPTION TIMING | F01 | | F11 | | F21 |

DECODING TIMING | F02 | | F12 | | F22 |

T00 T01 T02　　T10 T11 T12　　T20 T21 T22

# FIG.5

| | | | |
|---|---|---|---|
| TRANSMISSION TIMING | F00 | F10 | F20 |
| RECEPTION TIMING | F01 | F11' → F11 | F21 |
| DECODING TIMING | F02 | F12' → F12 | F22 |

T00  T01  T02          T10  T11'  T12'  T11  T12          T20  T21  T22

EP 1 392 059 A1

# FIG.6

VIDEO SIGNAL → VIDEO ENCODER (22) → BUFFER (12) → MULTIPLEXER (15) → TRANSMISSION LINE (16) → DEMULTIPLEXER (17) → BUFFER (18) → VIDEO DECODER (19) → VIDEO SIGNAL

AUDIO SIGNAL → AUDIO ENCODER (13) → BUFFER (14) → MULTIPLEXER (15) → TRANSMISSION LINE (16) → DEMULTIPLEXER (17) → BUFFER (20) → AUDIO DECODER (21) → AUDIO SIGNAL

EP 1 392 059 A1

# FIG.7

START

VIDEO SIGNAL IS CODED — ST1

AUDIO SIGNAL IS CODED ~ ST3

ACCUMULATION INSTRUCTING INFORMATION IS EMBEDDED IN "user-data" AREA OF ES DATA ~ ST2

DATA STREAM IS TRANSMITTED ~ ST4

DATA STREAM IS DEMULTIPLEXED ~ ST5

IS ACCUMULATION INSTRUCTING INFORMATION EMBEDDED? ~ ST6

NO

YES

VIDEO SIGNAL IS ACCUMULATED IN VBV BUFFER ~ ST7

VIDEO SIGNAL IS DECODED ~ ST8

AUDIO SIGNAL IS DECODED ~ ST9

END

# FIG.8

TRANSMISSION TIMING | F00      F10      F20

RECEPTION TIMING

ACCUMULATION CONDITIONS OF DATA STREAMS

DECODING TIMING

EP 1 392 059 A1

## INTERNATIONAL SEARCH REPORT

| International application No. |
| --- |
| PCT/JP02/04337 |

**A. CLASSIFICATION OF SUBJECT MATTER**
Int.Cl$^7$ H04N7/08, H04J3/00

According to International Patent Classification (IPC) or to both national classification and IPC

**B. FIELDS SEARCHED**

Minimum documentation searched (classification system followed by classification symbols)
Int.Cl$^7$ H04N7/00-7/088, H04N7/24-7/68

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | Hiroshi FUJIWARA, "Saishin MPEG Kyokasho", First edition, Ascii Corp., 01 August, 1994 (01.08.94), | 1-4,6-11, 13,14 |
| A | ISBN 4-7561-0247-6, pages 231 to 253 | 5,12 |
| X | Hiroshi YASUDA, "MPEG Multi Media Fugoka no Kokusai Hyojun", Maruzen Co., Ltd., 30 September, | 1-4,6-11, 13,14 |
| A | 1994 (30.09.94), ISBN 4-621-03987-3, pages 148 to 171 | 5,12 |
| A | JP 3031974 B2 (Nippon Telegraph And Telephone Corp.), 10 February, 2000 (10.02.00), Full text (Family: none) | 1-14 |

☐ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10 June, 2002 (10.06.02) | 25 June, 2002 (25.06.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)